# EUROPÄISCHE PATENTSCHRIFT

(11) **EP 1 014 605 B1**
(45) Veröffentlichungstag und Bekanntmachung des Hinweises auf die Patenterteilung: **14.12.2005**
(21) Anmeldenummer: 99123085.5
(22) Anmeldetag: 22.11.1999
(51) Int. Cl.: H04B 10/152

(54) **Optisches Codierungssystem für eine Impulse-Folge**
Optical coding system for a series of impulses
Système de codage optique pour une série d'impulsions

(30) Priorität: 24.12.1998 CH 255998
(43) Veröffentlichungstag der Anmeldung: 28.06.2000
(73) Patentinhaber: OERLIKON CONTRAVES AG, 8050 Zürich (CH)
(72) Erfinder: Gazzetta, Moreno, 8105 Regensdorf (CH); Scherrer, Roger, 8600 Dübendorf (CH); Stauffacher, Dietrich, 8032 Zürich (CH)
(74) Vertreter: OK pat AG

(56) Entgegenhaltungen:
- US-A- 4 373 916
- US-A- 5 317 582
- US-A- 5 788 500
- GRUBER J ET AL: "ELECTRONIC CIRCUITS FOR HIGH BIT RATE DIGITAL FIBER OPTIC COMMUNICATION SYSTEMS" IEEE TRANSACTIONS ON COMMUNICATIONS, Bd. 26, Nr. 5, 1. Juli 1978 (1978-07-01), Seiten 1088-1098, XP002099284

## Beschreibung

Die Erfindung bezieht sich auf ein Datenübertragungsgerät nach dem Oberbegriff des Patentanspruchs **1** und auf eine Decodierungseinrichtung für ein solches Datenübertragungsgerät.

Moderne Infrarot-Datenübertragungsgeräte, insbesondere für Simulationszwecke, umfassen oft einen Laser-Sender und mindestens einen mit speziellen Detektoren ausgerüsteten Laser-Empfänger. Solche Laser-Sender können beispielsweise mit GaAs-Injektions-Halbleiterlaserdioden für Pulsbetrieb ausgerüstet sein und mit einer Wellenlänge λ = 904,5 nm, was sich aus dem aktiven Material ergibt, einer Ausgangsleistung Pp = 1 W und einem Strom I = 10 A arbeiten, so dass der Lasertreiber eine relativ hohe Versorgungsspannung bis zu 100 V braucht.

Für derartige Anwendungen kann auch, wie in der Patentschrift US- 5,788,500, angegeben, eine CW-fähige Laserdiode mit einer Wellenlänge λ = 830 nm und einer Ausgangsleistung Pw von beispielsweise nur 55 mW verwendet werden, wobei dann die Laserstrahlung in einer Burst-Schwingungsform (Burst-Mode) ein- und ausgeschaltet werden kann.

Die bekannten Arten von Infrarot-Datenübertragungsgeräten haben Vor- und Nachteile. Beim ersten Typ ist jedoch der Aufwand grösser.

Aus der Patentschrift US-4,373,916 ist ein Laser Projektor für einen Waffenwirkungs-Simulator bekannt. Der Projektor emittiert Bursts von einer msec, wobei jeder Burst entweder eine Pulsmodulation oder eine CW Modulation von 170 kHz aufweist. Ein Detektor sensiert diese Emissionen mit Hilfe mehrerer Fotozellen, die parallel mit einem einzigen Verstärker verbunden sind. Der Detektor weist auch ein Bandpassfilter für 170 kHz auf und ist für 2 kHz vorgesehen.

Aus der Patentschrift US-5,317,582 ist ein System zum Detektieren von modulierenden Laser-Signalen bekannt, mit einem Speicher zum Speichern des Vorkommens einer Vielzahl von Pulsintervallen entsprechend mindestens einer vorgewählten Charakteristik, wobei ein Signal emittiert wird, wenn eine gewichtete Summe von verschiedener Pulsintervalle einen vorgegebenen Schwellenwert überschreitet.

Es ist nun Aufgabe der Erfindung,
- ein Datenübertragungsgerät mit einem wenig aufwendiges optischen Codierungssystem mit einer relativ hohen Reichweite zu Schaffen.

Diese Aufgabe wird in vorteilhafter Weise erfindungsgemäss gelöst durch
- ein Datenübertragungsgerät nach Patentanspruch 1.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Es zeigt:
- **Fig. 1**: eine schematische Darstellung einer möglichen Codierung eines Infrarot-Datenübertragungsgeräts hoher Ausgangsleistung,
- **Fig. 2**: eine schematische Darstellung einer erfindungsgemässen speziellen Codierung zur Erhöhung der Reichweite bei einem Infrarot-Datenübertragungsgerät mit CW-fähiger Laserdiode,
- **Fig. 3**: ein schematisches Blockschaltbild eines erfindungsgemässen optischen Codierungssystems für ein mit dieser speziellen Codierung arbeitendes Infrarot-Datenübertragungsgerät mit CW-fähiger Laserdiode, und
- **Fig. 4**: ein schematisches Blockschaltbild einer speziellen Decodierungseinrichtung eines Codierungssystems nach der Erfindung.

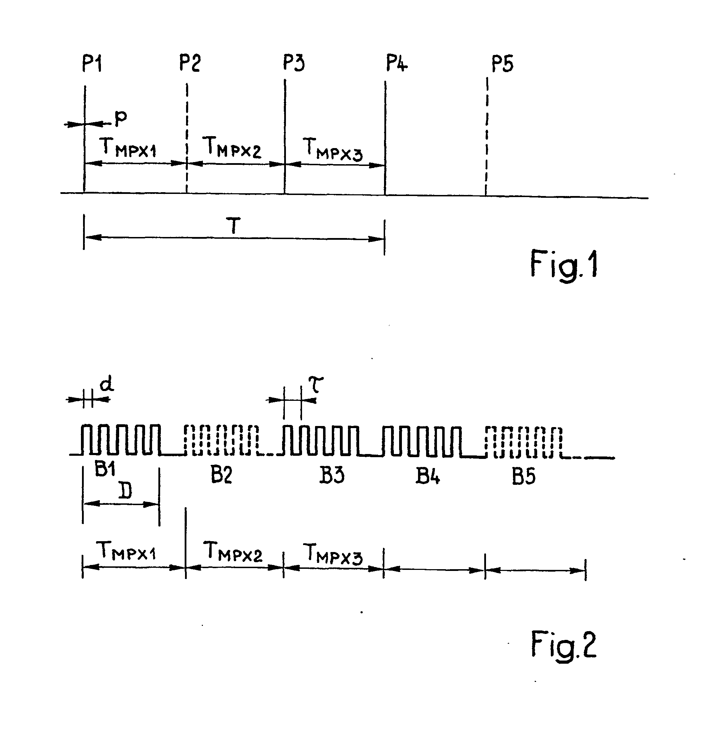

Eine mögliche Codierung besteht beispielsweise, wie in **Fig. 1** dargestellt, aus starken Impulsen P1, P2, P3, P4, P5, ... mit einer Impulsbreite **p** < 200 ns. In diesem Beispiel bilden die Impulse P1 und P4 eine Hauptreihe, einem Hauptinformationskanal entsprechend, wobei für die Repetition dieser Impulse bzw. Impuls-Lücken eine Zeitdauer **T** vorgesehen ist. Die Impulse P2, P3, P5, ... beziehen sich hingegen auf beliebige andere im Multiplexbetrieb zeitlich verschachtelte Informationskanäle, falls multiplexierte Sequenzen in Zeitabständen **TMPX1, TMPX2, TMPX3,** ... gesendet werden. In Fig. 1 stellen P2 und P5 Beispiele für Impuls-Lücken dar. In einem praktischen Fall können die Impulse eine Breite **p** von 100 ns bis 200 ns aufweisen und die Periode kann T = 333,333 µs sein.

**Fig. 2** zeigt wie diese Impulse P1, P2, P3, P4, P5, ... erfindungsgemäss durch relativ schwache, jedoch bedeutend breitere Impuls-Gruppen (Bursts) B1, B2, B3, B4, B5, ... ersetzt werden können, indem jedem Impuls (Fig. 1) ein Burst (Fig. 2) zugeordnet wird und für jede Impuls-Lücke eine Burst-Lücke vorgesehen ist, so dass diese Burst-Reihe (Fig. 2) dieselbe Information wie die Impulsreihe (Fig. 1) enthalten kann. Ein Burst besteht aus einer Anzahl **b** Impulse; b kann beispielsweise zwischen 3 und 12 liegen.

Die Codierung kann auch derart mit variablen Zeitabständen für die multiplexierten Sequenzen durchgeführt werden, dass der Zeitabstand T (Fig. 1) variabel ist, um in einer vorgegebenen Zeiteinheit, zum Beispiel in Millisekunden ausgedrückt, ganze Zahlen zu haben. So kann beispielsweise die Periode T nacheinander die Werte T1 = 333µs, T2 = 334µs und T 3 = 333µs, so dass T1 + T2 + T3 = 1000µs, was bei einer üblichen Verteilung jeweils zu Tk = 333+1/3µs führen würde. Für die nächsten Perioden gilt ebenfalls T4 = 333µs, T5 = 334µs und T6 = 333µs usw. Für die Dauer D in µs eines Bursts mit b Impulsen gilt (Fig. 2) die Beziehung D = [(b - 1). τ + d]. Dabei kann beispielsweise die Dauer d eines Impulses eines solchen Bursts grösser als 1 µs und die Dauer D des Bursts kleiner als 22 µs sein. Bei einer bevorzugten Ausführung des erfindungsgemässen Systems ist jedoch die Dauer d = 2 µs und die Lücke zwischen zwei Impulsen ebenfalls 2 µs.

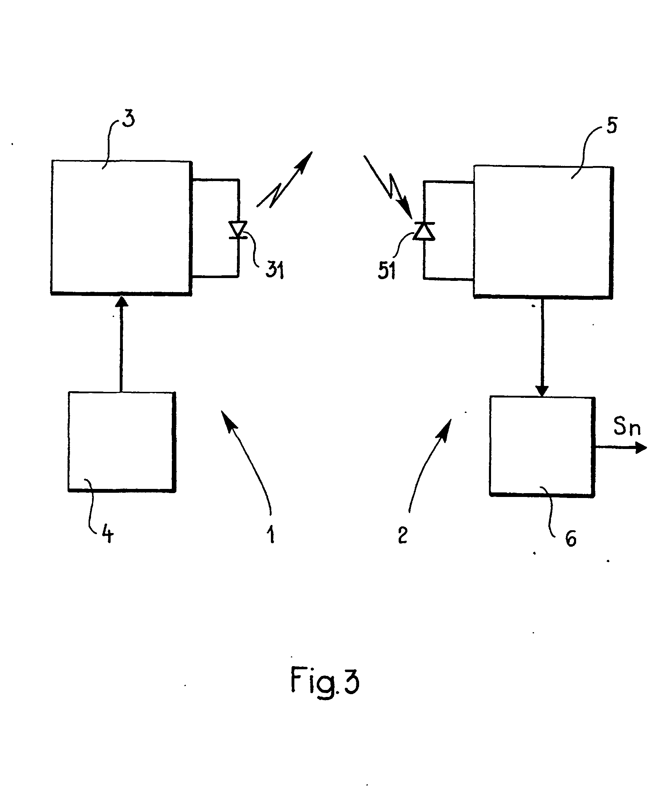

Das Datenübertragungsgerät nach **Fig. 3** umfasst einen Laser-Sender 1 und einen Laser-Empfänger 2, die vorzugsweise mit einer Infrarotstrahlung arbeiten. Der Sender 1 weist eine Lasereinrichtung 3 und einen Codegenerator 4 auf, die derart ausgebildet sind, dass der Laser-Sender 1 eine Burst-Folge B1, B2, B3, ... sendet, die einer vorgegebenen Impulssequenz entspricht. Der Empfänger ist für diesen Burst-Mode optimiert. Die Dauer **d** ist mindestens zwei- oder dreimal grösser als die Breite **p** der Impulse P1, P2, ... , die Dauer D eines aus b Pulsen bestehenden Bursts ist jedoch kleiner als die Dauer **T** bzw. kleiner als **TMPXmin,** falls k multiplexierte Sequenzen in unterschiedlichen Zeitabständen **TMPX1, TMPX2, TMPX3,** .... (Fig. 1) gesendet werden, wobei k ohne weiteres 2 oder 3 oder 4 usw. bis 40 und mehr sein kann.

Der Laser-Empfänger 2 weist eine Detektoreinrichtung 5 und eine Auswerteschaltung 6 auf, die die gewünschten Informationssignale Sn in der vorgegebenen Reihenfolge liefert.

Die Lasereinrichtung 3 umfasst eine Laserdiode 31, die eine viel kleinere Ausgangsleistung als jene hat, die man sonst bei Impuls-Lasern verwendet. Dies wird jedoch durch die bedeutend grössere Dauer D kompensiert, was einer Erhöhung der insgesamt ausgestrahlten Energie entspricht. Versuche haben gezeigt, dass die Empfänger-Detektoren 51 die empfangene Energie kumulieren, und dass daher die durch ein Infrarot-Datenübertragungsgerät mit CW-fähiger Laserdiode nach Fig. 3 erzielte Reichweite relativ gross ist.

Das Gerät nach Fig. 3 bringt jedoch noch die zusätzlichen Vorteile mit sich, dass eine CW-fähige Laserdiode günstiger als eine GaAs-Injektions-Laserdiode ist, dass auch ein sich in der Lasereinrichtung 3 befindender Lasertreiber günstiger wird, da keine Bauelemente der Leistungselektronik und keine relativ hohen Versorgungsspannungen verwendet werden müssen, und dass die Zuverlässigkeit (MTBF: Mean Time between Failures) des Laserstreibers höher ist, da nur tiefe Spannungen und Ströme für die Laserdiode notwendig sind. Zudem arbeitet die Laserdiode nach der Erfindung vorzugsweise mit einer Wellenlänge von 830 nm, die mit Nachtsichtgeräten (night vision goggles) besser sichtbar ist, als bei Anwendung der sonst üblichen Wellenlänge von 904,5 nm, und die Laserdiode ist im CW-Mode aussteuerbar; diese zwei Eigenschaften sind bei Ziellaser-Anwendungen besonders wichtig.

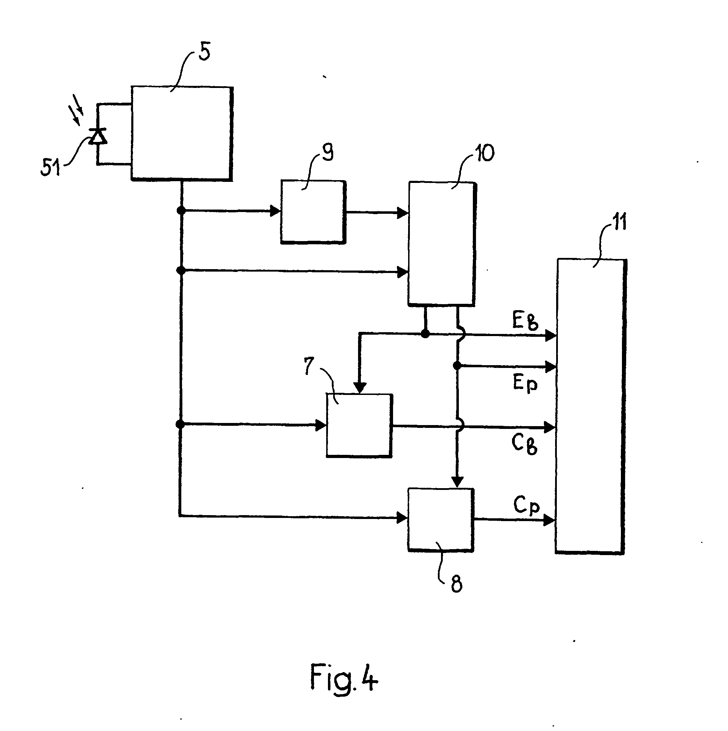

Bei der in **Fig. 4** dargestellten speziellen Decodierungseinrichtung für das erfindungsgemässe optische Codierungssystems sind an den Ausgang der Detektoreinrichtung 5 zwei Decoder 7 und 8, eine Starterkennungs-Einrichtung 9 und eine Prüfschaltung 10 angeschlossen, wobei mit dem Ausgang der Einrichtung 9 ein weiterer Eingang der Prüfschaltung 10 verbunden ist, der nicht nur einen Freigabeimpuls (enable) Eb für den Decoder 7 und für eine Code-Auswerteschaltung 11 sondern auch einen Freigabeimpuls (enable) Ep für den Decoder 8 und für die Code-Auswerteschaltung 11 liefert, die eingangsseitig zusätzlich an die Ausgänge der Decoder 7 und 8 angeschlossen ist.

Die Decodierungseinrichtung nach Fig. 4 funktioniert folgendermassen:

Der Detektor 51 oder die Detektoren des Empfängers 2 können die Strahlung mit den Impulsen P1, P2, ... (Fig. 1) oder den Bursts B1, B2, ... (Fig. 2) detektieren. Am Ausgang der Detektoreinrichtung 5 erscheinen jedoch immer Impulse. Das System arbeitet vorzugsweise mit einer Codierung, die eine partikuläre Vorschrift erfüllt, die beispielsweise darin besteht, dass am Anfang jedes Informationspakets immer zwei Impulse einer Hauptreihe in einem vorbekannten Zeitabstand **T** gesendet werden. Der Decoder 8 ist zur Decodierung der Impulse vorgesehen, die dieser partikulären Vorschrift genügen, einerlei ob sie aus Impulsen P1, P2, ... oder aus Bursts B1, B2, ... gewonnen wurden. Sobald die Starterkennungs-Einrichtung 9 den Anfang eines Informationspakets detektiert, aktiviert sie die Prüfschaltung 10. Sobald diese detektiert, dass die erwähnte Vorschrift erfüllt wird, und solange das Informationspakt andauert, gibt die Prüfschaltung 10 ein Signal **Ep** an den Decoder 8 und an die Code-Auswerteschaltung, und das System arbeitet in einem Betrieb nach dieser partikulären Vorschrift. Kommen keine Impulse, die die erwähnte Vorschrift erfüllen, so liefert die Prüfschaltung 10 ein Signal **Eb,** um das System in einen anderen Betrieb umzuschalten, und zwar vorzugsweise, um den Empfänger 5 fähig zu machen, mit einem Laser-Sender vom Burst-Typ zusammenzuarbeiten. Die Reihenfolge kann jedoch auch umgekehrt sein.

Das System kann auch softwaremässig realisiert werden, und die Abstände **T** können zeitlich nach einer speziellen vorprogrammierten Vorschrift geändert werden. Vorzugsweise ist jedoch der Wert **T** konstant oder variabel, und zwar in der weiter oben erwähnten Reihenfolge T1, T2, T3, ... Tn, Tn+1, Tn+2, ... beispielsweise einer Frequenz von 1/2kHz, 1/3 kHz oder ¼ kHz usw. oder Vielfachen davon entsprechend, indem die Summen T1 + T2 + ... + Tn = Tn+1, Tn+2, ... T2n usw. konstant sind, und wobei auch andere beliebige Werte sinnvoll sein können. Der Decoder 8 kann ausgebildet sein, um auch dann Impulse zu decodieren, wenn die Periode T = Tp der Impulse (Fig. 1) konstant und die Periode T = Tb der Bursts (Fig. 2) variabel ist; in diesem Fall kann die Summe von n Bursts gleich n.Tp sein.

Der Laser-Empfänger 2 kann mindestens einen Detektor 51 aufweisen, der wenigstens für Wellenlängen zwischen 800 nm und 1100 nm empfindlich ist, wobei gegebenenfalls der Laser-Empfänger einen Begrenzer (limiter) zum Schutz der weiteren Elektronik aufweisen kann. Der Laser-Empfänger 2 kann jedoch auch mindestens einen Detektor für Wellenlängen in einem Bereich von zumindest angenähert 830 nm und wenigstens einen weiteren Detektor für Wellenlängen in einem Bereich von zumindest angenähert 904,5 nm aufweisen.

Der Laser-Empfänger 2 umfasst somit Erkennungs-Mittel 9, 10, für Impuls-Folgen (Fig. 1) oder Bursts-Folgen (Fig. 2), die eine vorbestimmte partikuläre Vorschrift erfüllen, wobei dann der Decoder 8 aktiv ist. Anderenfalls ist der Decoder 7 aktiv. Vorzugsweise besteht diese Vorschrift darin, dass zwei ständig wiederkehrende Impulse bzw. Bursts in einem Abstand **T** bzw. T1, T2, T3, ... erkannt werden sollen. Diese Decoder-Mittel und gegebenenfalls auch die Erkennungs-Mittel sind vorzugsweise mindestens teilweise softwaremässig realisiert.

Das erfindungsgemässe Codierungssystem kann beispielsweise in Geräten realisiert werden, die für Sportzwecke, als Spielzeuge, für Schiessübungen bei der Polizei oder bei militärischen Trainingsaufgaben verwendet werden können. Dabei kann der Sender auch LEDs (Light Emitting Diodes) als Sendeelemente aufweisen.

Die oben dargelegten Ausführungsbeispiele sind lediglich als Veranschaulichung der Anwendung eines solchen Codierungssystems zu verstehen. Insbesondere soll auch für sich getrennt das entsprechende Decodierungsteilsystem geschützt sein.

## Patentansprüche

1. Datenübertragungsgerät mit mindestens einem Laser-Sender und mindestens einem Laser-Empfänger,
derart ausgelegt,
- dass der Laser-Sender **(1)** eine Lasereinrichtung **(3)** und einen Codegenerator **(4)** aufweist,
- dass der Laser-Empfänger **(2)** eine Detektoreinrichtung **(5)** und eine Auswerteschaltung **(6)** mit Erkennungsmitteln **(9, 10)** für Impuls-Folgen **(P1, P2, P3,** ...) oder Burst-Folgen **(B1, B2, B3, ... )** aufweist,
- dass die Lasereinrichtung **(3)** eine CW-fähige Laserdiode ist mit einer Wellenlänge in welcher ein Laserstrahl ein- und ausgekoppelt werden kann in einem Burst-Modus, derart, dass die Lasereinrichtung eine Burst-Folge **(B1, B2, B3,** ... ) übermittelt, wobei Impulse des Bursts eine Dauer d aufweisen und der Burst aus einer Anzahl b von Impulsen besteht und eine Dauer D hat, und wobei die Burst-Folge (**B1, B2, B3**, ... ) einer vorbestimmten Impuls-Folge entspricht,
- dass die Erkennungsmittel **(9, 10)** an den Ausgang der Detektoreinrichtung **(5)** angeschlossen sind, und der Laser-Empfänger **(2)** ausgebildet ist, um eine vorbestimmte Impuls-Folge zu decodieren, unabhängig davon, ob sie aus einer Impuls-Folge **(P1, P2, P3, ..)** eines gepulsten Lasers oder aus der oben genannten vorbestimmten Burst-Folge **(B1, B2, B3,** ... ) eines (W-fähigen Lasers besteht,
wobei die Burst-Folge **(B1, B2, B3,** ... ) mindestens eine Haupt-Folge von Bursts **(B1, B4)** mit einer Repetitionsperiode T umfasst, die Bursts **(B1, B4)** durch Kumulieren der Energie detektiert werden, die Dauer d der Impulse eines Bursts **(B1, B4)** grösser als 400 ns ist, und die Dauer D eines aus einer Anzahl b Impulse bestehenden Bursts **(B1, B4)** kleiner als ein Grenzwert Tg = 1000 µs ist.

2. Datenübertragungsgerät nach Anspruch **1**,
**dadurch gekennzeichnet,**
**dass** die Lasereinrichtung (3) so ausgebildet ist, dass multiplexierte Sequenzen in unterschiedlichen Zeitabständen (TMPX1, TMPX2, TMPX3, ...) gesendet werden, und dass die Dauer D eines aus b Pulsen bestehenden Bursts kleiner als der kleinste dieser Zeitabstände (TMPXmin) ist.

3. Datenübertragtingsgerät nach Anspruch **1,**
**dadurch gekennzeichnet,**
**dass** die Detektoreinrichtung (**5**) auch ausgebildet ist, um eine Folge von Impulsen **(P1, P2, P3,** ..) zu detektieren, deren Dauer **p** kleiner als 400 ns ist, und die mindestens eine Hauptreihe von Impulsen **(P1, P4)** umfasst.

4. Datenübertragungsgerät nach Ansprüchen **1** oder **2,**
**dadurch gekennzeichnet,**
**dass** die Repetitionsperiode T der Impulse **(P1, P4)** und/oder der Bursts **(B1, B4)** variabel ist, um in einer vorgegebenen Zeiteinheit ganzzahlige Werte T1, T2, ... Tn für die Repetitionsperiode T zu erhalten, und dass die Dauer D kleiner als der minimale Wert dieser Zeitabstände T1, ... Tn ist.

5. Datenübertragungsgerät nach einem der Ansprüche **1 bis 3,**
**dadurch gekennzeichnet,**
**dass** bei beliebigen Werten von j = 0, 1, 2, ... und einem vorbestimmten Wert von n die Summe von n Repetitionsperioden T1+j, T2+j .... Tn+j konstant ist.

6. Datenübertragungsgerät nach Anspruch **1,**
**dadurch gekennzeichnet,**
**dass** die Auswerteschaltung **(6)** umfasst:
- eine Starterkennungs-Einrichtung **(9),** welche dazu ausgebildet ist, einen Anfang eines Informationspaketes zu detektieren,
- eine Prüfschaltung **(10),** die einen Eingang besitzt, welcher mit einem Ausgang der Starterkennungs-Einrichtung **(9)** verbunden ist,
- einen ersten Decoder **(8),** der eingangsseitig mit einem ersten Ausgang der Prüfschaltung **(10)** verbunden ist, und
- einen zweiten Decoder **(7),** der eingangsseitig mit einem zweiten Ausgang der Prüfschaltung **(10)** verbunden ist, sowie
- eine Code-Auswertschaltung **(11),** die eingangsseitig verbunden ist mit
- dem ersten Ausgang der Prüfschaltung **(10),**
- dem zweiten Ausgang der Prüfschaltung **(10),**
- einem Ausgang der ersten Decoders **(8)** und
- einem Ausgang des zweiten Decoders **(7),**
wobei die Prüfschaltung **(10)** dazu ausgebildet ist,
- bei Erfüllung einer bestimmten Vorschrift ein Signal **(Ep)** an den ersten Decoder **(8)** und einen Impuls **(Cp)** an die Code-Auswertschaltung **(11)** zu liefern, und
- bei Nicht-Erfüllen dieser Vorschrift ein Signal **(Eb)** an den zweiten Decoder **(7)** und ein Signal **(Cp)** an die Code-Auswertschaltung **(11)** zu liefern.

7. Datenübertragungsgerät nach Anspruch 6,
**dadurch gekennzeichnet,**
- **dass** die Auswerteschaltung (6) so ausgebildet ist, dass wenn eine vorbestimmte Vorschrift erfüllt wird, der erste Decoder (**8**) und anderenfalls der zweite Decoder (**7**) aktiv ist.

8. Datenübertragungsgerät nach Anspruch **7**,
**dadurch gekennzeichnet,**
**dass** die Decoder **(7, 8)** und/oder die Erkennungs-Mittel **(9, 10**) mindestens teilweise softwaremässig realisiert sind.

9. Datenübertragungsgerät nach einem der Ansprüche **1** bis **8,**
**dadurch gekennzeichnet,**
**dass** der Laser-Empfänger (**2**) mindestens einen Detektor (**51**) aufweist, der wenigstens für Wellenlängen zwischen 800 nm und 1100 nm empfindlich ist.

10. Datenübertragungsgerät nach einem der Ansprüche **1** bis **9,**
**dadurch gekennzeichnet,**
**dass** der Laser-Empfänger (**2**) mindestens einen Detektor für Wellenlängen in einem Bereich von zumindest angenähert 830 nm und wenigstens einen weiteren Detektor für Wellenlängen in einem Bereich von zumindest angenähert 904,5 nm aufweist.

11. Datenübertragungsgerät nach Anspruch 6,
**dadurch gekennzeichnet,**
**dass** die Detektoreinrichtung (**5**) und/oder der erste Decoder (**8**) ausgebildet ist, um auch dann Impulse (P1, P2, ...; B1, B2, ...) zu verarbeiten, wenn ihre Repetitionsperiode T variabel ist, um in einer vorgegebenen Zeiteinheit ganzzahlige Werte T1, T2, ... Tn für die Repetitionsperiode T zu erhalten.

## Claims

1. Data transmission apparatus with at least one laser emitter and at least one laser receiver, embodied in away
- that the laser emitter **(1)** comprises a laser device **(2)** and a code generator **(4),**
- that the laser receiver **(2)** comprises a detector device **(5)** and an evaluation circuit **(6)** with recognition means **(9, 10)** for pulse sequences **(P1, P2, P3,** ...) or burst sequences **(B1, B2, B3, ...),**
- that the laser device **(3)** is a CW capable laser diode with a wave length in which a laser beam can be switched in or out to a burst mode, such that the laser device transmits a burst sequence **(B1, B2, B3, ...),** whereby pulses of the burst have a length d and the burst consists of a number b of pulses and has a length D, and whereby the burst sequence **(B1, B2, B3, ...)** corresponds to a predetermined pulse sequence,
- that the recognition means **(9, 10)** are connected to the output of the detector device **(5)** and the laser receiver **(2)** is embodied for decoding a predetermined pulse sequence, independently whether it consists of a pulse sequence **(P1, P2, P3,...)** of a pulsed laser or of the predetermined burst sequence **(B1, B2, B3,...)** of a CW capable laser mentioned above,
- that the burst sequence **(B1, B2, B3,...)** comprises at least one main series of bursts **(B1, B4)** with a repetition period T, the bursts **(B1, B4)** are detected by cumulating the energy, the length d of a burst **(B1, B4)** is longer than 400 ns, and the length of a burst **(B1, B4)** consisting of a number b of pulses is shorter than a threshold value Tg = 1000 µs.

2. Data transmission apparatus according to claim 1,
**characterised**
**in that** the laser device **(3)** is embodied such that multiplexed sequences are emitted in different time intervals (**TMPX1, TMPX2, TMPX3, ...)** and
**in that** the length of a burst consisting of b pulses is shorter than the shortest one of these time intervals **(TPMXmin).**

3. Data transmission apparatus according to claim **1,**
**characterised**
**in that** the detector device **(5)** is also embodied to detect a sequence of pulses **(P1, P2, P3,** ...) the length of which is shorter than 400 ns and
which comprises at least one main series of pulses **(P1, P4).**

4. Data transmission apparatus according to claim **1** or **2,**
**characterised**
**in that** the repetition period T of the pulses **(P1, P4)** and/or the bursts **(B1, B4)** is variable, for obtaining within a predetermined time unit whole numbered values T1, T2, ... for the repetition period T, and in that the length D is shorter than the minimal value of these time periods T1, ... Tn.

5. Data transmission apparatus according to one of claims **1** through **3,**
**characterised**
**in that**, for arbitrary values of j = 0, 1, 2, ... and a predetermined value of n, the sum of n repetition periods T1+j, T2+j, ... Tn+j is constant.

6. Data transmission apparatus according to claim **1**,
**characterised**
**in that** the evaluation circuit **(6)** comprises
- a device for start recognition **(9)** which is adapted to detect a beginning of an information package,
- a test circuit **(10)** having an input which is connected with an output of the device for start recognition **(9),**
- a first decoder **(8)** which is connected with it's input with a first output of the test circuit **(10),** and
- a second decoder **(7)** which is connected with it's input with a second output of the test circuit, as well as
- a code-evaluation circuit **(11),** which is connected with it's input with
- the first output of the test circuit **(10),**
- the second output of the test circuit **(10),**
- an output of the first decoder **(8)** and
- an output of the second decoder **(7),**
whereby the checking circuit **(10)** is adapted
- to supply a signal **(Ep)** to the first decoder **(8)** and a pulse **(Cp)** to the code-evaluation circuit **(11)** when a determined specification is met, and
- to supply a signal **(Eb)** to the second decoder **(7)** and a signal **(Cp)** to the code-evaluation circuit **(11)** when the determined specification is not met.

7. Data transmission apparatus according to claim **6,**
**characterised**
**in that** the evaluation circuit **(6)** is embodied such that, when a predetermined specification is met, the first decoder **(8)** is active and in other cases the second decoder **(7)** is active.

8. Data transmission apparatus according to claim **7,**
**characterised**
**in that** the decoders **(7, 8)** and/or the recognition means **(9, 10)** are realised at least partially by software.

9. Data transmission apparatus according to one of claims **1** through **8,**
**characterised**
**in that** the laser receiver **(2)** comprises at least one detector **(51),** which is at least sensible for wavelengths between 800 nm and 1100 nm.

10. Data transmission apparatus according to one of claims **1** through **9,**
**characterised**
**in that that** the laser receiver **(2)** comprises at least one detector for wave lengths in a range of at least approximately 830 nm and at least one further detector for wave lengths in a range of at least approximately 904,5 nm.

11. Data transmission apparatus according to claim **6**,
**characterised**
**in that** the detector device **(5)** and/or the first decoder **(8)** is adapted to proceed pulses (P1, P2, P3, ...; B1, B2, B3, ...) also when their repetition period T is variable, for obtaining whole numbered values T1, T2, ... Tn for the repetition within a predetermined time unit.

## Revendications

1. Appareillage de transmission de données avec au moins un émetteur laser et au moins un récepteur laser, conçu de façon
- à ce que l'émetteur laser **(1)** comporte un dispositif laser **(3)** et un générateur de code **(4),**
- à ce que le récepteur laser **(2)** comporte un dispositif de détection **(5)** et un circuit d'évaluation **(6)** avec des moyens d'identification **(9, 10)** pour des séquences d'impulsions, **(P1, P2, P3,** ...) ou des séquences de bursts **(B1, B2, B3,** ...),
- à ce que le dispositif laser **(3)** est une diode laser continue avec une longueur d'ondes à laquelle un rayon laser peut être embrayé ou débrayé dans un mode de bursts, tel que le dispositif laser transmet une séquence de bursts **(B1, B2, B3,** ...), des impulsions du burst ayant une longueur d et le burst consistant d'un nombre b d'impulsions et ayant une longueur D, et la séquence de bursts **(B1, B2, B3,** ...) correspondant à une séquence d'impulsions prédéterminée,
- à ce que les moyens d'identification **(9, 10)** sont connectés à la sortie du dispositif de détection **(5)** et le récepteur laser **(2)** est conçu pour décoder une séquence d'impulsions prédéterminée, indépendamment si elle consiste en une séquence d'impulsions **(P1, P2, P3,** ...) d'un laser pulsé ou de la séquence de bursts **(B1, B2, B3,** ...) du laser continu mentionné ci-dessus,
- à ce que la séquence de bursts **(B1, B2, B3,**...) comporte au moins une série principale de bursts **(B1, B4)** avec une période de répétition T, les bursts **(B1, B4)** sont détectés par cumul de l'énergie, la longueur d d'un burst **(B1, B4)** est plus longue que 400 ns, et la longueur d'un burst consistant en un nombre d'impulsions est plus courte qu'une valeur limite Tg = 1000µs.

2. Appareillage de transmission de données selon la revendication **1,**
**caractérisé**
**en ce que** le dispositif laser **(3)** est conçu de façon à ce que des séquences en multiplex sont émises avec différentes périodes (**TMPX1, TMPX2, TMPX3,** ...), et à ce que la longueur D d'un burst consistant en b impulsions est plus petite que le plus petit de ces périodes
**(TMPXmin).**

3. Appareillage de transmission de données selon la revendication **1,**
**caractérisé**
**en ce que** le dispositif de détection **(5)** est aussi conçu de façon à détecter une séquence d'impulsions **(P1, P2, P3,** ...) dont la longueur est plus petite que 400 ns et qui comporte au moins une série principale d'impulsions **(P1, P4).**

4. Appareillage de transmission de données selon les revendications **1** ou **2**,
**caractérisé**
**en ce que** la période de répétition T des impulsions **(P1, P4)** et/ou des bursts (**B1, B4)** est variable, pour recevoir, pendant une unité de temps prédéterminée, des valeurs T1, T2, ... Tn en nombres entiers pour la période de répétition, et en ce que la longueur D est plus petite que la valeur minimale de ces périodes de temps T1, ... Tn.

5. Appareillage de transmission de données selon une des revendications **1** à **3,**
**caractérisé**
**en ce que** pour des valeurs j = 0, 1, 2, ... et pour une valeur prédéterminée de n, la somme de n périodes de répétition T1+j, T2+j, ... Tn+j est constante.

6. Appareillage de transmission de données selon la revendication **1,**
**caractérisé**
**en ce que** le circuit d'évaluation **(6)** comporte
- un dispositif de reconnaissance de démarrage **(9)** qui est conçu de façon à détecter un début d'un paquet d'informations,
- un circuit de test **(10),** qui possède une entrée, qui est connectée avec une sortie du dispositif de reconnaissance de démarrage **(9),**
- un premier décodeur **(8)** qui est connecté par son entrée avec une première sortie du circuit de test **(10),**
- un deuxième décodeur **(7)** qui est connecté par son entrée avec une deuxième sortie du circuit de test **(10),** ainsi qu'
- un circuit d'évaluation de code **(11)** qui est connecté par son entré avec
- la première sortie du circuit de test **(10),**
- la deuxième sortie du circuit de test **(11),**
- une sortie du premier décodeur **(8),** et
- une sortie du deuxième décodeur **(7),**
le circuit de test **(10)** étant conçu de façon
- à fournir, si une prescription déterminée est accomplie, un signal **(Ep)** au premier décodeur **(8)** et une impulsion **(Cp)** au circuit d'évaluation de code **(11),** et
- à fournir, si cette prescription n'est pas accomplie, un signal **(Eb)** au deuxième décodeur **(7)** et un signal **(Cp)** au circuit d'évaluation de code.

7. Appareillage de transmission de données selon la revendication **6,**
**caractérisé**
**en ce que** le circuit d'évaluation **(6)** est conçu de façon à ce que, si une prescription prédéterminée est accomplie, le premier décodeur **(8)** est actif et dans le cas contraire le deuxième décodeur **(7)** est actif.

8. Appareillage de transmission de données selon la revendication **7,**
**caractérisé**
**en ce que** les décodeurs **(7, 8)** et/ou les moyens de reconnaissance **(9, 10)** sont réalisés au moins partiellement à l'aide de logiciels.

9. Appareillage de transmission de données selon une des revendications **1 à 8,**
**caractérisé**
**en ce que** le récepteur laser **(2)** comporte au moins un détecteur **(51)** qui est sensible au moins à des longueurs d'ondes entre 800 nm et 1100 nm.

10. Appareillage de transmission de données selon une des revendications **1 à 9,**
**caractérisé**
**en ce que** le récepteur laser **(2)** comporte au moins un détecteur pour des longueurs d'ondes dans une gamme d'au moins approximativement 830 nm et au moins un autre détecteur pour des longueurs d'ondes dans une gamme d'au moins approximativement 904,5 nm.

11. Appareillage de transmission de données selon la revendication **6**,
**caractérisé**
**en ce que** le dispositif de détection (**5**) et/ou le premier décodeur **(8)** sont conçus de façon à traiter des impulsions (**P1, P2, ...; B1**, **B2**, ...) même quand leur période de répétition T est variable, afin de recevoir, pendant une unité de temps prescrite, des valeurs de nombres entières pour la période de répétition T.
